# EUROPEAN PATENT APPLICATION

(11) **EP 4 789 763 A1**
(43) Date of publication of application: **12.08.2026**
(21) Application number: 26156754.9
(22) Date of filing: 05.02.2026
(51) Int. Cl.: B01L 3/00, G01N 27/333, G01N 27/38, G01N 35/00, G01N 35/10

(54) **ELECTROLYTE DETECTION UNIT AND ELECTROLYTE DETECTION METHOD**

(30) Priority: 06.02.2025 JP 2025018616
(71) Applicant: Canon Medical Systems Corporation, Tochigi 324- (JP)
(72) Inventor: TAMURA, Masahito, Otawara-shi, 324-0036 (JP)
(74) Representative: Marks & Clerk LLP

(57) **Abstract**

According to one embodiment, an electrolyte detection unit includes a probe that feeds a solution sucked from one end to the other end, a vortex generation member disposed near the other end of the probe, and an electrode unit that generates potential relating to predetermined ions included in the solution that has passed through a region in which the vortex generation member is disposed.

## Description

### FIELD

Embodiments described herein relate generally to an electrolyte detection unit and an electrolyte detection method.

### BACKGROUND

An electrolyte measuring unit that electrochemically measures a specific electrolyte concentration in a solution is presently widely incorporated in an automatic analyzing apparatus, and is mainly used for measuring sodium ions, potassium ions and chloride ions in a sample mainly of a biological origin. The electrolyte measuring unit sucks a solution (a mixed liquid of a sample and a reagent (for example, a dilution liquid)), and measures the electrolyte concentration by measuring potentials of electrodes associated with the above-described ions. In the meantime, after measuring the electrolyte concentration with respect to a certain sample, the electrolyte measuring unit needs to suck a calibration liquid before measuring an electrolyte concentration of another sample, in order to calibrate an electrolyte detection unit that the electrolyte measuring unit includes.

Conventionally, in the calibration of the electrolyte detection unit, a sufficient amount of calibration liquid is necessary for replacing, via an ion exchange membrane, ions included in a mixed liquid of a sample measured immediately before. Specifically, in the electrolyte detection unit, in a case where the substitution rate of ions via the ion exchange membrane is low, the amount of necessary solution may increase in some cases. In such cases, for example, the calibration liquid needs to be sucked several times until the electrolyte concentration becomes a specified concentration, and, in the automatic analyzing apparatus, there is a concern about a decrease in throughput of an examination item, with respect to which the electrolyte concentration is measured. It is thus required to improve the substitution rate of ions in the electrolyte detection unit.

### SUMMARY

Examples in accordance with embodiments are set out below.
(1) An electrolyte detection unit comprising:
   a probe configured to feed a solution sucked from one end to the other end;
   a vortex generation member disposed near the other end of the probe; and
   an electrode unit configured to generate a potential relating to predetermined ions included in the solution that has passed through a region in which the vortex generation member may be disposed.
(2) The vortex generation member may be a member having a columnar shape, which may be disposed to intersect with a flowing direction of the solution.
(3) The columnar shape may be a circular cylindrical shape.
(4) The electrode unit may include a flow path for flowing in the solution, and
   an outside diameter of the vortex generation member may be less than an inside diameter of the flow path.
(5) The electrolyte detection unit may further comprise two packings provided between the probe and the electrode unit, wherein
   the vortex generation member may be disposed by being clamped between the two packings.
(6) An entire length of the vortex generation member may be less than an outside diameter of each of the two packings and may be greater than an inside diameter of the flow path.
(7) The probe may include a terminal end member at the other end, and
   the vortex generation member may be disposed by being inserted in the terminal end member.
(8) An entire length of the vortex generation member may be greater than an inside diameter of a flow path in which the vortex generation member provided in the terminal end member may be disposed, and may be greater than an inside diameter of the flow path of the electrode unit.
(9) The terminal end member may be formed of hard rubber.
(10) The electrolyte detection unit may further comprise a packing provided between the probe and the electrode unit, wherein
   the probe may include a terminal end member at the other end, and
   the vortex generation member may be disposed by being clamped between the terminal end member and the packing.
(11) An entire length of the vortex generation member may be less than an outside diameter of the packing and may be greater than an inside diameter of the flow path.
(12) The columnar shape may be an elliptic cylindrical shape.
(13) The vortex generation member may be formed of a hard material with a high corrosion resistance.
(14) The hard material may be stainless steel.
(15) The electrode unit may be configured to generate the potential that may be proportional to a logarithm of a concentration of the predetermined ions.
(16) The electrode unit may include a flow path for flowing in the solution, and
   the electrode unit may include an ion exchange membrane corresponding to the predetermined ions at a position facing the flow path.
(17) An automatic analyzing apparatus comprising:
   a reaction disk configured to hold a plurality of reaction tubes; and
   an electrolyte measuring unit including the electrolyte detection unit, the electrolyte measuring unit being configured to measure a concentration of the predetermined ions by sucking the solution contained in the reaction tubes.
(18) An electrolyte detection unit comprising:
   a probe configured to feed a solution sucked from one end to the other end; and
   an electrode unit connected to the other end and configured to generate a potential relating to predetermined ions included in the solution, wherein
   vortices are generated in the solution sucked by the probe, and
   the electrode unit is configured to generate the potential relating to the predetermined ions included in the solution in which the vortices are generated.
(19) The vortices may be Karman vortices.
(20) An electrolyte detection method comprising:
   feeding a solution sucked from one end to the other end;
   generating vortices in the sucked solution; and
   generating a potential relating to predetermined ions included in the solution in which the vortices are generated.
(21) The vortices may be Karman vortices.

### BRIEF DESCRIPTION OF THE DRAWINGS

FIG. 1 is a block diagram illustrating a configuration example of an automatic analyzing apparatus according to a first embodiment.
FIG. 2 is a diagram illustrating a configuration example of an analysis mechanism of FIG. 1.
FIG. 3 is a diagram illustrating a configuration example of an electrolyte measuring unit of FIG. 2.
FIG. 4 is a diagram exemplarily illustrating a configuration of an electrolyte detection unit according to the first embodiment.
FIG. 5 is a diagram illustrating an X-Y cross section including a vortex generation member of FIG. 4, as viewed from a -Z direction.
FIG. 6 is a diagram for describing a region in which Karman vortices occur, and a region in which a Karman vortex street continues, in the electrolyte detection unit according to the first embodiment.
FIG. 7 is graphs of comparison between conventional liquid feed and liquid feed involving Karman vortices, with respect to slope averages of respective ion electrodes in the electrolyte detection unit according to the first embodiment.
FIG. 8 is graphs of comparison between conventional liquid feed and liquid feed involving Karman vortices, with respect to slope variations of respective ion electrodes in the electrolyte detection unit according to the first embodiment.
FIG. 9 is a diagram exemplarily illustrating a configuration of an electrolyte detection unit according to a second embodiment.
FIG. 10 is a diagram illustrating a state before the vortex generation member is inserted into a terminal end member of FIG. 9.
FIG. 11 is a diagram illustrating a cross section along line A-A of FIG. 10, as viewed from the -Z direction.
FIG. 12 is a diagram illustrating a state after the vortex generation member is inserted into the terminal end member of FIG. 9.
FIG. 13 is a diagram illustrating a cross section along line B-B of FIG. 12, as viewed from the -Z direction.

### DETAILED DESCRIPTION

In general, according to one embodiment, an electrolyte detection unit includes a probe that feeds a solution sucked from one end to the other end, a vortex generation member disposed near the other end of the probe, and an electrode unit that generates potential relating to predetermined ions included in the solution that has passed through a region in which the vortex generation member is disposed.

Hereinafter, embodiments of an electrolyte detection unit and an automatic analyzing apparatus will be described in detail with reference to the drawings.

### (First Embodiment)

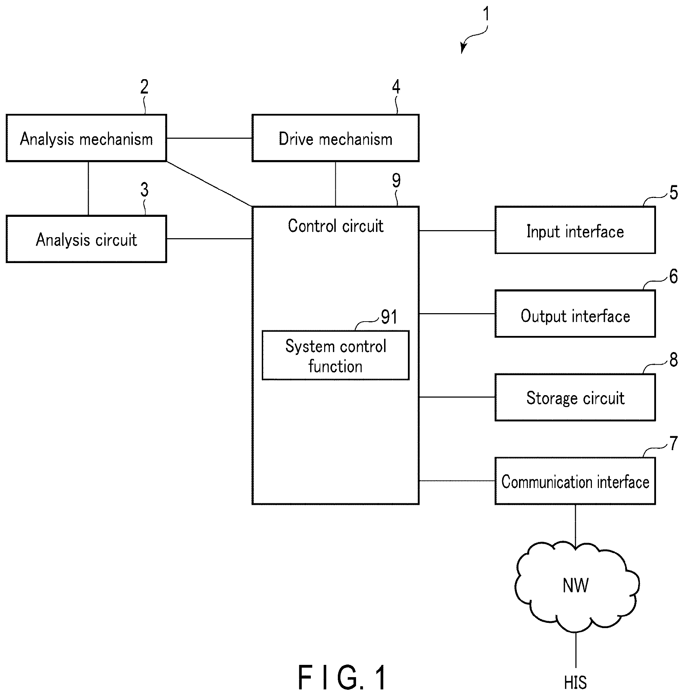

FIG. 1 is a block diagram illustrating a configuration example of an automatic analyzing apparatus according to an embodiment. For example, as illustrated in FIG. 1, an automatic analyzing apparatus 1 according to the present embodiment includes an analysis mechanism 2, an analysis circuit 3, a drive mechanism 4, an input interface 5, an output interface 6, a communication interface 7, a storage circuit 8, and a control circuit 9. Note that the control circuit may also be described as a processing circuit.

The analysis mechanism 2 mixes a sample, such as a standard sample or a sample to be examined, with a reagent used for various examination items set for this sample. The analysis mechanism 2 measures a mixed liquid of the sample and the reagent, and generates standard data and examination data, which are associated with, for example, absorbance. In addition, the analysis mechanism 2 measures the mixed liquid of the sample and the reagent, and generates standard data and examination data, which are associated with electrode potential.

The analysis circuit 3 is a processor that generates calibration data, analysis data, and the like by analyzing the generated standard data and examination data. The analysis circuit 3 reads an operation program from the storage circuit 8, and generates calibration data, analysis data, and the like according to the read operation program. For example, the analysis circuit 3 generates, based on the standard data, calibration data indicating a relationship between the standard data and a standard value set in advance for the standard sample. Further, the analysis circuit 3 generates analysis data, based on the examination data and the calibration data of the examination item corresponding to this examination data. The analysis data includes, for instance, data in which a concentration value and an enzyme activity value are associated, and data in which the concentration of desired ions in the sample are recorded in a time-series manner. The analysis circuit 3 outputs the generated calibration data, analysis data, and the like to the control circuit 9.

The drive mechanism 4 drives the analysis mechanism 2 under the control of the control circuit 9. The drive mechanism 4 is realized by, for example, a gear, a stepping motor, a belt conveyor, a lead screw, and the like. For example, the drive mechanism 4 rotates a reaction disk 201 (to be described later) at a predetermined rotational angle. The predetermined rotational angle is an angle of rotation in one cycle, and is, for example, about 90°. One cycle corresponds to a time interval in which a sample is dispensed, and is set at a predetermined number of seconds. For example, an automatic analyzing apparatus, in which one cycle is set at 4.5 seconds, has a performance of dispensing a sample in every 4.5 seconds.

The input interface 5 receives, for example, by an operator's operation, settings such as analysis parameters for each examination item related to the sample requested to be measured via an in-hospital network NW. The input interface 5 is realized by, for example, a mouse, a keyboard, a touch pad to which an instruction is input by touching an operation surface, and the like. The input interface 5 is connected to the control circuit 9, converts an operation instruction input from the operator into an electric signal, and outputs the electric signal to the control circuit 9.

Note that, in the present specification, the input interface 5 is not limited to those including physical operation components such as a mouse and a keyboard. For example, the input interface 5 may be a processing circuit that receives an electric signal corresponding to an operation instruction that is input from an external input device provided separately from the automatic analyzing apparatus 1, and outputs this electric signal to the control circuit 9.

The output interface 6 is connected to the control circuit 9, and outputs a signal received from the control circuit 9. The output interface 6 is realized by, for example, a display circuit, a print circuit, an audio device, and the like.

The display circuit includes a CRT display, a liquid crystal display, an organic EL display, an LED display, a plasma display, and the like. Further, the display circuit may be a processing circuit that converts data representing a display target into a video signal, and outputs the video signal to the outside. The print circuit includes a printer or the like. Further, the print circuit may be an output circuit that outputs data representing a print target to the outside. The audio device includes, for example, a speaker. Further, the audio device may include an output circuit that outputs an audio signal to the outside.

The communication interface 7 is connected to, for example, the in-hospital network NW. The communication interface 7 performs data communication with a hospital information system (HIS) via the in-hospital network NW. Note that the communication interface 7 may perform data communication with the HIS via a laboratory information system (LIS) connected to the in-hospital network NW.

The storage circuit 8 includes a recording medium that is readable by a processor, such as a magnetic recording medium, an optical recording medium, or a semiconductor memory. Note that the storage circuit 8 may not necessarily be realized by a single storage device. For example, the storage circuit 8 may be realized by a plurality of storage devices.

Further, the storage circuit 8 stores order information such as an examination order input from the operator, or an examination order received by the communication interface 7 via the in-hospital network NW. The order information includes a sample ID, an examination item necessary for a sample that is a measurement target, and a measurement order relating to an examination. The storage circuit 8 stores various setting values for executing a series of operations of the respective components of the automatic analyzing apparatus 1 by one cycle, and an operation program that is read by the control circuit 9.

The control circuit 9 is a processor that functions as a center of the automatic analyzing apparatus 1. For example, the control circuit 9 outputs a control signal for driving respective components of the analysis mechanism 2 to the drive mechanism 4. The control circuit 9 executes an operation program stored in the storage circuit 8, thereby implementing a function corresponding to this operation program. Note that the control circuit 9 may include a memory that temporarily stores at least a part of the data stored in the storage circuit 8.

For example, the control circuit 9 includes a system control function 91 (control unit) by executing an operation program. In the present embodiment, a case is described in which the system control function 91 is implemented by a single processor, but the present invention is not limited to this. For example, a control circuit may be constituted by combining a plurality of independent processors, and each processor may execute an operation program to implement the function.

The control circuit 9 integrally controls, by the system control function 91, each unit in the automatic analyzing apparatus 1, for example, based on input information that is input from the input interface 5. Specifically, the control circuit 9 controls, for example, the operation of an electrolyte measuring unit 212 (to be described later).

The configuration of the automatic analyzing apparatus according to the first embodiment has been described above. Next, the analysis mechanism of the automatic analyzing apparatus according to the first embodiment is described.

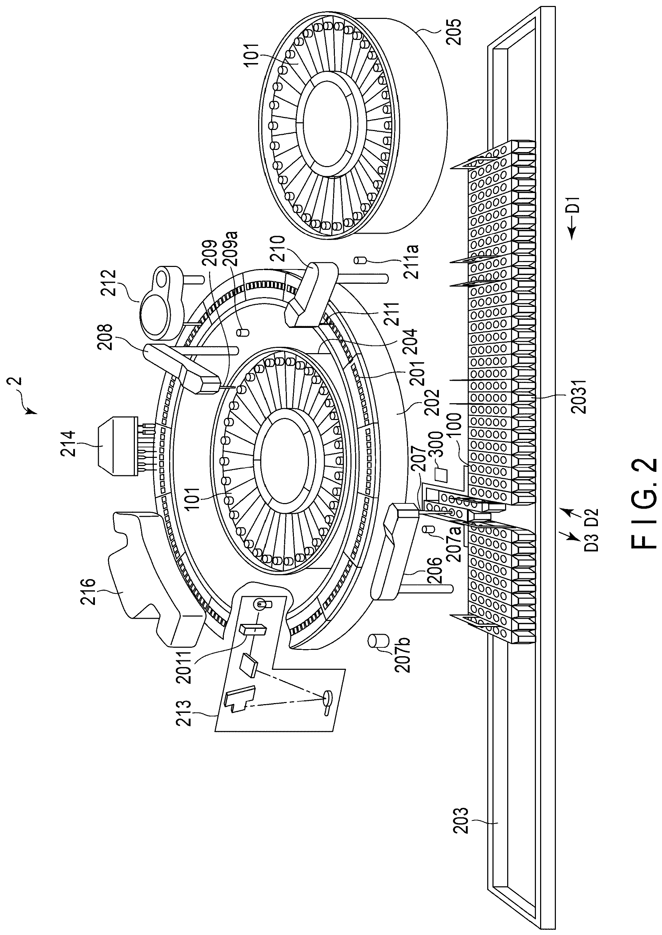

FIG. 2 is a diagram illustrating a configuration example of the analysis mechanism of FIG. 1. For example, as illustrated in FIG. 2, the analysis mechanism 2 includes a reaction disk 201, a thermostatic unit 202, a rack sampler 203, a first reagent storage 204, and a second reagent storage 205. Further, the analysis mechanism 2 includes a sample dispensing arm 206, a sample dispensing probe 207, a cleaning tank 207a, a detergent storage container 207b, a first reagent dispensing arm 208, a first reagent dispensing probe 209, a cleaning tank 209a, a second reagent dispensing arm 210, a second reagent dispensing probe 211, a cleaning tank 211a, an electrolyte measuring unit 212, a photometric unit 213, a cleaning unit 214, and a stirring unit 216.

Hereinafter, first, the reaction disk 201, the thermostatic unit 202, the rack sampler 203, the first reagent storage 204, and the second reagent storage 205 will be described.

The reaction disk 201 holds a plurality of reaction tubes 2011 arranged in a ring shape. The reaction disk 201 is alternately rotated and stopped by the drive mechanism 4 at a predetermined time interval (corresponding to one cycle) of, for example, 4.5 seconds. The reaction tube 2011 is formed of, for example, glass, polypropylene, or acrylic. Note that the reaction tube 2011 may be called a reaction container or a cell. In addition, the operation of the reaction disk 201 during an examination may be called a cycle operation.

The thermostatic unit 202 is a container that stores water (thermostatic water) kept at a predetermined temperature (normally 37°C). For example, an additive for an antibacterial purpose is included in the thermostatic water. The thermostatic unit 202 immerses the reaction tube 2011 in the stored thermostatic water, thereby heating the liquid (for example, mixed liquid) contained in the reaction tube 2011 and keeping the liquid at a constant temperature.

The rack sampler 203 movably supports a sample rack 2031 capable of holding a plurality of sample containers 100 that contains the sample requested to be measured. In the example illustrated in FIG. 2, the sample rack 2031 capable of holding five sample containers 100 in parallel is illustrated.

The rack sampler 203 includes a reader 300. The reader 300 is provided, for example, at such a position as to be capable of reading a mark attached to the sample container 100. The mark is a code in which identification information or the like of the sample contained in the sample container 100 is encoded, such as a barcode, a one-dimensional pixel code, and a two-dimensional pixel code. The reader 300 starts reading the mark, upon receiving an instruction for a mark read start from the control circuit 9. If the sample container 100 arrives at the position where the mark can be read, the reader 300 reads the identification information of the sample from the mark. The reader 300 outputs the read identification information to the control circuit 9. Note that the reader 300 may be replaced with some other sensor utilizing RFID (Radio Frequency IDentification). In the case where the reader 300 is replaced with the sensor utilizing RFID, the mark attached to the sample container 100 is replaced with an IC tag.

The rack sampler 203 is provided with a conveyance region for conveying the sample rack 2031 from a loading position where the sample rack 2031 is loaded to a collection position where the sample rack 2031, for which measurement has been completed, is collected. In the conveyance region, a plurality of sample racks 2031 aligned in a lateral direction is moved in a direction D1, which is the alignment direction of the sample racks 2031, by the drive mechanism 4.

Further, in order to move the sample container 100 held by the sample rack 2031 to a predetermined sample suction position, the rack sampler 203 is provided with a drawing region in which the sample rack 2031 is drawn from the conveyance region. The sample suction position is provided, for example, at a position where a rotation trajectory of the sample dispensing probe 207 (to be described later) intersects with a movement trajectory of an opening of the sample container that is supported by the rack sampler 203 and held by the sample rack 2031. In the drawing region, the sample rack 2031 that has been conveyed is moved in a direction D2, which is perpendicular to the direction D1 in a horizontal plane, by the drive mechanism 4. In addition, at the position in the drawing region where the mark can be read, the mark provided on the sample container, which is held by the sample rack 2031 that has been moved in the direction D2, is read by the reader 300.

Further, the rack sampler 203 is provided with a return region for returning the sample rack 2031, which holds the sample container in which the sample is sucked, to the conveyance region. In the return region, the sample rack 2031 is moved in a direction D3, which is opposite to the direction D2, by the drive mechanism 4.

The first reagent storage 204 cools a plurality of reagent containers 101 that contains a first reagent that reacts with a predetermined component contained in a standard sample or a predetermined component contained in a sample to be examined. Although not illustrated in FIG. 2, the first reagent storage 204 is covered with a detachable reagent cover. In the first reagent storage 204, a reagent rack is provided in a rotatable manner. The reagent rack holds a plurality of reagent containers 101 arranged in an annular shape. The reagent rack is rotated by the drive mechanism 4.

A first reagent suction position is set at a predetermined position on the first reagent storage 204. The first reagent suction position is provided, for example, at a position where the rotation trajectory of the first reagent dispensing probe 209 (to be described later) intersects with the movement trajectory of the opening of the reagent container 101 arranged in an annular shape on the reagent rack.

The second reagent storage 205 cools, for example, a plurality of reagent containers 101 that contains a second reagent paired with a first reagent of a two-reagent system. Although not illustrated in FIG. 2, the second reagent storage 205 is covered with a detachable reagent cover. In the second reagent storage 205, a reagent rack is provided in a rotatable manner. The reagent rack holds a plurality of reagent containers 101 arranged in an annular shape. Note that the second reagent cooled in the second reagent storage 205 may be a reagent having the same component and same concentration as the first reagent cooled in the first reagent storage 204. Specifically, the first reagent storage 204 and the second reagent storage 205 may store the same kind of reagent.

A second reagent suction position is set at a predetermined position on the second reagent storage 205. The second reagent suction position is provided, for example, at a position where the rotation trajectory of the second reagent dispensing probe 211 intersects with the movement trajectory of the opening of the reagent container 101 arranged in an annular shape on the reagent rack.

Next, the sample dispensing arm 206, the sample dispensing probe 207, the cleaning tank 207a, the detergent storage container 207b, the first reagent dispensing arm 208, the first reagent dispensing probe 209, the cleaning tank 209a, the second reagent dispensing arm 210, the second reagent dispensing probe 211, the cleaning tank 211a, the electrolyte measuring unit 212, the photometric unit 213, the cleaning unit 214, and the stirring unit 216 will be described.

The sample dispensing arm 206 is provided between the reaction disk 201 and the rack sampler 203. The sample dispensing arm 206 is provided to be movable up and down in a vertical direction and to be rotatable in a horizontal direction by the drive mechanism 4. The sample dispensing arm 206 holds the sample dispensing probe 207 at one end.

The sample dispensing probe 207 rotates along an arcuate rotation trajectory along with rotation of the sample dispensing arm 206. An opening of the sample container held by the sample rack 2031 on the rack sampler 203 is located on this rotation trajectory.

Further, a sample discharge position for discharging the sample sucked by the sample dispensing probe 207 to the reaction tube 2011 is provided on the rotation trajectory of the sample dispensing probe 207. The sample discharge position corresponds to an intersection point between the rotation trajectory of the sample dispensing probe 207 and the movement trajectory of the reaction tube 2011 held on the reaction disk 201.

Further, a cleaning position at which the sample dispensing probe 207 is cleaned is provided at a position different from the sample suction position and the sample discharge position on the rotation trajectory of the sample dispensing probe 207. At the cleaning position, the cleaning tank 207a for cleaning the sample dispensing probe 207 is provided.

Further, a detergent suction position for the sample dispensing probe 207 to suck a detergent may be provided at a position different from the sample suction position, the sample discharge position and the cleaning position on the rotation trajectory of the sample dispensing probe 207. At the detergent suction position, the detergent storage container 207b for storing a detergent used in cleaning the electrolyte measuring unit (to be described later) may be provided.

The sample dispensing probe 207 is driven by the drive mechanism 4 and moves in the vertical direction directly above the opening of the sample container held by the sample rack 2031 on the rack sampler 203, at the sample discharge position, at the cleaning position, or at the detergent suction position.

Further, under the control of the control circuit 9, the sample dispensing probe 207 sacks a sample from the opening of the sample container. Further, under the control of the control circuit 9, the sample dispensing probe 207 discharges the sucked sample to the reaction tube 2011 located directly below the sample discharge position. The sample dispensing probe 207 performs this series of dispensing operations, for example, once during one cycle.

Further, under the control of the control circuit 9, the sample dispensing probe 207 sucks a cleaning liquid from the cleaning tank 207a located directly below the cleaning position on the rotation trajectory of the sample dispensing probe 207. The cleaning liquid is, for example, pure water, an alkaline detergent for probe cleaning, or an acid detergent for probe cleaning. Under the control of the control circuit 9, the sample dispensing probe 207 discharges the sucked cleaning liquid to the reaction tube 2011 located directly below the sample discharge position. Thereby, the sample dispensing probe 207 and the reaction tube 2011 located directly below the sample discharge position are cleaned. The sample dispensing probe 207 performs this series of cleaning operations, for example, once during one cycle.

Further, in the case where the detergent storage container 207b is included in the automatic analyzing apparatus 1, the sample dispensing probe 207 sucks, under the control of the control circuit 9, the detergent from the detergent storage container 207b located directly below the detergent suction position on the rotation trajectory of the sample dispensing probe 207. In addition, under the control of the control circuit 9, the sample dispensing probe 207 discharges the sucked detergent to the reaction tube 2011 located directly below the sample discharge position. The sample dispensing probe 207 performs this series of dispensing operations, for example, once during one cycle.

The first reagent dispensing arm 208 is provided between the reaction disk 201 and the first reagent storage 204. The first reagent dispensing arm 208 is provided to be movable up and down in the vertical direction and to be rotatable in the horizontal direction by the drive mechanism 4. The first reagent dispensing arm 208 holds the first reagent dispensing probe 209 at one end.

The first reagent dispensing probe 209 rotates along an arcuate rotation trajectory along with the rotation of the first reagent dispensing arm 208. The first reagent suction position is provided on this rotation trajectory. Further, a first reagent discharge position for discharging the reagent sucked by the first reagent dispensing probe 209 to the reaction tube 2011 is set on the rotation trajectory of the first reagent dispensing probe 209. The first reagent discharge position corresponds to an intersection point between the rotation trajectory of the first reagent dispensing probe 209 and the movement trajectory of the reaction tube 2011 held on the reaction disk 201. Further, a cleaning position at which the first reagent dispensing probe 209 is cleaned is provided at a position different from the first reagent suction position and the first reagent discharge position on the rotation trajectory of the first reagent dispensing probe 209. At the cleaning position, the cleaning tank 209a for cleaning the first reagent dispensing probe 209 is provided.

The first reagent dispensing probe 209 is driven by the drive mechanism 4 and moves in the vertical direction at the first reagent suction position, at the first reagent discharge position, or at the cleaning position on the rotation trajectory.

Under the control of the control circuit 9, the first reagent dispensing probe 209 sucks the first reagent from the reagent container located directly below the first reagent suction position. Specifically, the first reagent dispensing probe 209 is an example of a reagent dispensing probe according to the present embodiment. Further, under the control of the control circuit 9, the first reagent dispensing probe 209 discharges the sucked first reagent to the reaction tube 2011 located directly below the first reagent discharge position. The first reagent dispensing probe 209 performs this series of dispensing operations, for example, once during one cycle.

Under the control of the control circuit 9, the first reagent dispensing probe 209 sucks the cleaning liquid from the cleaning tank 209a located directly below the cleaning position on the rotation trajectory of the first reagent dispensing probe 209. Under the control of the control circuit 9, the first reagent dispensing probe 209 discharges the sucked cleaning liquid to the reaction tube 2011 located directly below the first reagent discharge position. Thereby, the first reagent dispensing probe 209 and the reaction tube 2011 located directly below the first reagent discharge position are cleaned. The first reagent dispensing probe 209 performs this series of cleaning operations, for example, once during one cycle.

The second reagent dispensing arm 210 is provided between the reaction disk 201 and the second reagent storage 205. The second reagent dispensing arm 210 is provided to be movable up and down in the vertical direction and to be rotatable in the horizontal direction by the drive mechanism 4. The second reagent dispensing arm 210 holds the second reagent dispensing probe 211 at one end.

The second reagent dispensing probe 211 rotates along an arcuate rotation trajectory along with the rotation of the second reagent dispensing arm 210. The second reagent suction position is provided on this rotation trajectory.

Further, a second reagent discharge position for discharging the reagent sucked by the second reagent dispensing probe 211 to the reaction tube 2011 is set on the rotation trajectory of the second reagent dispensing probe 211. The second reagent discharge position corresponds to an intersection point between the rotation trajectory of the second reagent dispensing probe 211 and the movement trajectory of the reaction tube 2011 held on the reaction disk 201.

Further, a detergent discharge position for discharging the detergent sucked by the second reagent dispensing probe 211 to the reaction tube is set on the rotation trajectory of the second reagent dispensing probe 211. The detergent discharge position corresponds to an intersection point between the rotation trajectory of the second reagent dispensing probe 211 and the movement trajectory of the reaction tube 2011 held on the reaction disk 201, and is a position different from the second reagent discharge position.

Further, a cleaning position at which the second reagent dispensing probe 211 is cleaned is provided at a position different from the second reagent suction position, the second reagent discharge position and the detergent discharge position on the rotation trajectory of the second reagent dispensing probe 211. At the cleaning position, the cleaning tank 211a for cleaning the second reagent dispensing probe 211 is provided.

The second reagent dispensing probe 211 is driven by the drive mechanism 4 and moves in the vertical direction at the second reagent suction position, at the second reagent discharge position, at the detergent discharge position or at the cleaning position on the rotation trajectory.

Under the control of the control circuit 9, the second reagent dispensing probe 211 sucks the second reagent from the reagent container located directly below the second reagent suction position. Specifically, the second reagent dispensing probe 211 is an example of the reagent dispensing probe according to the present embodiment. Further, under the control of the control circuit 9, the second reagent dispensing probe 211 discharges the sucked second reagent to the reaction tube 2011 located directly below the second reagent discharge position. The second reagent dispensing probe 211 performs this series of dispensing operations, for example, once during one cycle.

Under the control of the control circuit 9, the second reagent dispensing probe 211 sucks the cleaning liquid from the cleaning tank 211a located directly below the cleaning position on the rotation trajectory of the second reagent dispensing probe 211. Under the control of the control circuit 9, the second reagent dispensing probe 211 discharges the sucked cleaning liquid to the reaction tube 2011 located directly below the second reagent discharge position. Thereby, the second reagent dispensing probe 211 and the reaction tube 2011 located directly below the second reagent discharge position are cleaned. The second reagent dispensing probe 211 performs this series of cleaning operations, for example, once during one cycle.

The electrolyte measuring unit 212 measures an electrolyte concentration of the mixed liquid of the sample and the reagent discharged into the reaction tube 2011. The electrolyte measuring unit 212 includes an ion selective electrode (ISE) and a reference electrode. Under the control of the control circuit 9, the electrolyte measuring unit 212 measures a potential between the ISE and the reference electrode for the mixed liquid that is a measurement target, thereby detecting an electrolyte of ions (for example, sodium ions, potassium ions and chloride ions (chlorine ions)) that are examination items. The electrolyte measuring unit 212 outputs data obtained by measuring the potential to the analysis circuit 3 as standard data or examination data. Note that a concrete configuration of the electrolyte measuring unit 212 will be described later.

The photometric unit 213 optically measures a predetermined component in the mixed liquid of the sample and the reagent discharged into the reaction tube 2011. The photometric unit 213 includes a light source and a photodetector. The photometric unit 213 emits light from the light source under the control of the control circuit 9. The irradiated light is incident from a first side wall of the reaction tube 2011 and is emitted from a second side wall facing the first side wall. The photometric unit 213 detects the light emitted from the reaction tube 2011 by a photodetector.

Specifically, for example, the photodetector detects light that has passed through a mixed liquid of the standard sample and the reagent in the reaction tube 2011, and generates standard data represented by absorbance or the like, based on the intensity of the detected light. Further, the photodetector detects light that has passed through a mixed liquid of the sample to be examined and the reagent in the reaction tube 2011, and generates examination data represented by absorbance or the like, based on the intensity of the detected light. The photometric unit 213 outputs the generated standard data and examination data to the analysis circuit 3.

The cleaning unit 214 cleans the inside of the reaction tube 2011 in which the measurement of the mixed liquid has been completed in the electrolyte measuring unit 212 and the photometric unit 213. This cleaning unit 214 includes a cleaning liquid supply pump (not illustrated) for supplying a cleaning liquid for cleaning the reaction tube 2011. Further, the cleaning unit 214 includes a cleaning nozzle (not illustrated) that discharges the cleaning liquid, which is supplied from the cleaning liquid supply pump, into the reaction tube 2011, and sucks each liquid of the mixed liquid and the cleaning liquid in the reaction tube 2011.

The stirring unit 216 is provided near an outer periphery of the reaction disk 201. The stirring unit 216 includes a stirrer, and the stirrer stirs a mixed liquid of the sample and the first reagent contained in the reaction tube 2011 located at a stirring position on the reaction disk 201, or stirs a mixed liquid of the sample, the first reagent, and the second reagent contained in the reaction tube 2011.

The analysis mechanism of the automatic analyzing apparatus according to the first embodiment has been described above. Next, a concrete configuration of the electrolyte measuring unit that the analysis mechanism includes is described.

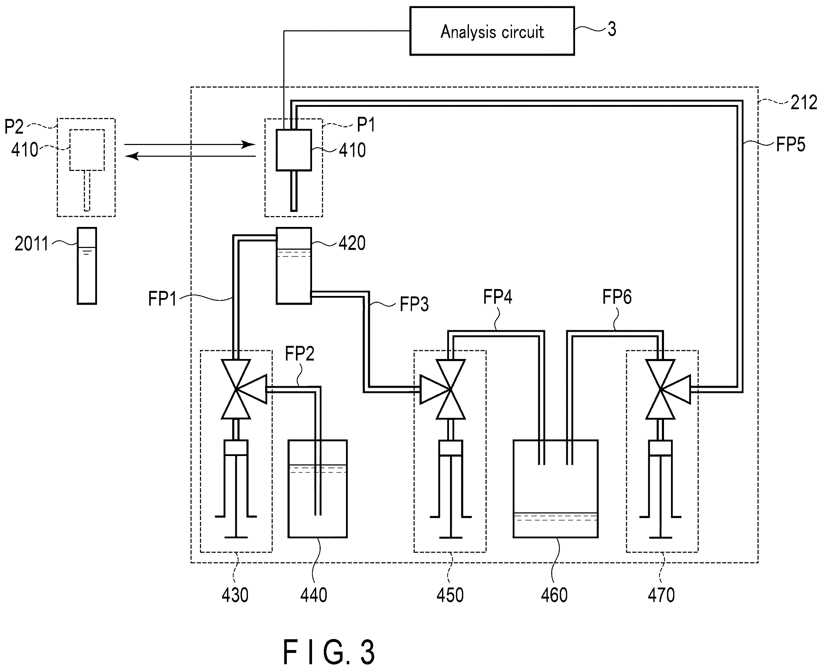

FIG. 3 is a diagram illustrating a configuration example of the electrolyte measuring unit of FIG. 2. For example, as illustrated in FIG. 3, the electrolyte measuring unit 212 includes an electrolyte detection unit 410, a calibration liquid storage container 420, a calibration liquid supply pump 430, a calibration liquid tank 440, a calibration liquid disposal pump 450, a waste liquid tank 460, and a suction pump 470.

Further, a flow path FP1, which is connected by, for example, a tube, is provided between the calibration liquid supply pump 430 and the calibration liquid storage container 420. Similarly, a flow path FP2 is provided between the calibration liquid supply pump 430 and the calibration liquid tank 440. A flow path FP3 is provided between the calibration liquid disposal pump 450 and the calibration liquid storage container 420. A flow path FP4 is provided between the calibration liquid disposal pump 450 and the waste liquid tank 460. A flow path FP5 is provided between the suction pump 470 and the electrolyte detection unit 410. A flow path FP6 is provided between the suction pump 470 and the waste liquid tank 460.

The electrolyte detection unit 410 is driven by the drive mechanism 4, and moves between a calibration liquid suction position P1 and a mixed liquid suction position P2. The calibration liquid suction position P1 is set above the calibration liquid storage container 420. The mixed liquid suction position P2 is set above the reaction tube 2011 in the reaction disk 201. Further, the electrolyte detection unit 410 includes a probe, and sucks the calibration liquid at the calibration liquid suction position P1 by the suction pump 470, and sucks the mixed liquid at the mixed liquid suction position P2.

Further, the electrolyte detection unit 410 includes the above-described ISE and reference electrode, and measures the potential of the calibration liquid or the mixed liquid. The electrolyte detection unit 410 outputs measurement data relating to the calibration liquid or the mixed liquid to the analysis circuit 3. Note that a concrete configuration of the electrolyte detection unit 410 will be described later.

The calibration liquid storage container 420 stores a predetermined amount of calibration liquid. The stored calibration liquid is supplied by the calibration liquid supply pump 430. In addition, at a time of replacing the calibration liquid, the calibration liquid is sucked by the calibration liquid disposal pump 450.

The calibration liquid supply pump 430 is constituted by, for example, a plunger, a syringe, and a three-way valve. The three-way valve is connected to the syringe, the flow path FP1 and the flow path FP2. In the case of sucking the calibration liquid from the calibration liquid tank 440, the calibration liquid supply pump 430 closes the connection of the flow path FP1 in the three-way valve, and operates the plunger. In the case of supplying the sucked calibration liquid to the calibration liquid storage container 420, the calibration liquid supply pump 430 closes the connection of the flow path FP2 in the three-way valve, and operates the plunger.

In the calibration liquid tank 440, the calibration liquid is contained. The contained calibration liquid is supplied to the calibration liquid storage container 420 via the calibration liquid supply pump 430.

The calibration liquid disposal pump 450 is constituted by, for example, a plunger, a syringe, and a three-way valve. The three-way valve is connected to the syringe, the flow path FP3 and the flow path FP4. In the case of sucking the calibration liquid of the calibration liquid storage container 420, the calibration liquid disposal pump 450 closes the connection of the flow path FP4 in the three-way valve, and operates the plunger. In the case of disposing of the sucked calibration liquid into the waste liquid tank 460, the calibration liquid disposal pump 450 closes the connection of the flow path FP3 in the three-way valve, and operates the plunger.

The waste liquid tank 460 stores a waste liquid. The stored waste liquid is, for example, the calibration liquid stored in the calibration liquid storage container 420, the mixed liquid sucked by the electrolyte detection unit 410, and the calibration liquid sucked by the electrolyte detection unit 410.

The suction pump 470 is constituted by, for example, a plunger, a syringe, and a three-way valve. The three-way valve is connected to the syringe, the flow path FP5 and the flow path FP6. In the case of sucking the mixed liquid of the reaction tube 2011 or the calibration liquid of the calibration liquid storage container 420, the suction pump 470 closes the connection of the flow path FP6 in the three-way valve, and operates the plunger. In the case of disposing of the sucked mixed liquid or calibration liquid, the suction pump 470 closes the connection of the flow path FP5 in the three-way valve, and operates the plunger.

The standard samples include two kinds of standard samples, namely a first standard sample and a second standard sample, which have different concentrations of electrolytes. A first standard value indicating the concentration of each electrolyte included in the first standard sample, and a second standard value indicating the concentration of each electrolyte included in the second standard sample, are stored in the storage circuit 8 by the input from the input interface 5. Note that the first standard value and the second standard value are included in the above-described standard data.

If the calibration is executed, the sample dispensing probe 207 dispenses the first standard sample in the reaction tube 2011, and the first reagent dispensing probe 209 dispenses the first reagent in the reaction tube 2011 in which the first standard sample was dispensed. By the dispensing of the first standard sample and the first reagent, the first standard sample is diluted with the first reagent in the reaction tube 2011, thus obtaining the first standard mixed liquid containing each electrolyte of a lower concentration than in the calibration liquid.

Similarly, in regard to the second standard sample, if the calibration is executed, the sample dispensing probe 207 dispenses the second standard sample in the reaction tube 2011, and the first reagent dispensing probe 209 dispenses the first reagent in the reaction tube 2011 in which the second standard sample was dispensed. By the dispensing of the second standard sample and the first reagent, the second standard sample is diluted with the first reagent in the reaction tube 2011, thus obtaining the second standard mixed liquid containing each electrolyte of a higher concentration than in the calibration liquid.

If the examination is executed, the sample dispensing probe 207 dispenses a sample to be examined, in which the concentration of each electrolyte is unknown, in the reaction tube, and the first reagent dispensing probe 209 dispenses the first reagent in the reaction tube 2011 in which the sample to be examined was dispensed. By the dispensing of the sample to be examined and the first reagent, a mixed liquid to be examined, in which the sample to be examined is diluted with the first reagent, is obtained in the reaction tube 2011.

The concrete configuration of the electrolyte measuring unit that the analysis mechanism includes has been described above. Next, a description is given of a concrete configuration of the electrolyte detection unit that the electrolyte measuring unit includes.

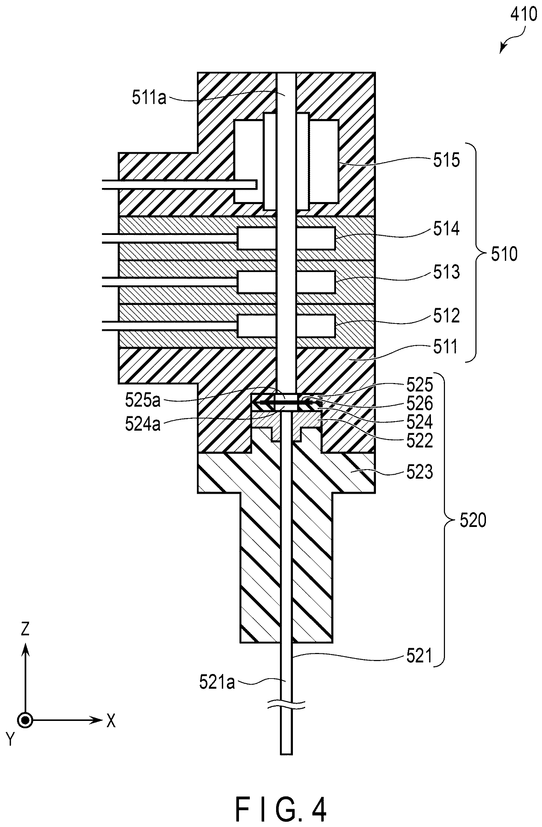

FIG. 4 is a diagram exemplarily illustrating a configuration of the electrolyte detection unit according to the first embodiment. For example, as illustrated in FIG. 4, the electrolyte detection unit 410 includes an electrode unit 510 and a suction unit 520.

The electrode unit 510 includes a main body 511, an ISE 512, an ISE 513, an ISE 514, and a reference electrode 515. The electrode unit 510 is kept at a constant temperature (for example, 37°C).

The main body 511 is formed of, for example, polyvinylchloride. A through-hole 511a penetrating in a suction direction (Z direction in FIG. 4) is formed in the main body 511. Further, in the main body 511, a plurality of openings are formed in a direction perpendicular to the through-hole 511a. The ISE 512, ISE 513, ISE 514 and reference electrode 515 are connected to the openings. Further, in the main body 511, a cylindrical recess for attaching the suction unit 520 is formed. Note that since the through-hole 511a is a part into which a solution flows in the electrode unit 510, the through-hole 511a may be called "electrode unit flow path" (or simply "flow path").

The ISE 512 includes an ion exchange membrane that selectively detects sodium ions at a position facing the electrode unit flow path. The ISE 512 is connected to the opening formed in the main body 511 via this ion exchange membrane. The ISE 512 generates a potential that is proportional to the logarithm of the concentration of sodium ions, with reference to the reference electrode 515, under the condition that the activity coefficient and solution temperature of the solution (calibration liquid or mixed liquid) flowing in the through-hole 511a become constant.

The ISE 513 includes an ion exchange membrane that selectively detects potassium ions at a position facing the electrode unit flow path. The ISE 513 is connected to the opening formed in the main body 511 via this ion exchange membrane. The ISE 513 generates a potential that is proportional to the logarithm of the concentration of potassium ions, with reference to the reference electrode 515, under the condition that the activity coefficient and solution temperature of the solution (calibration liquid or mixed liquid) flowing in the through-hole 511a become constant.

The ISE 514 includes an ion exchange membrane that selectively detects chloride ions at a position facing the electrode unit flow path. The ISE 514 is connected to the opening formed in the main body 511 via this ion exchange membrane. The ISE 514 generates a potential that is inversely proportional to the logarithm of the concentration of chloride ions, with reference to the reference electrode 515, under the condition that the activity coefficient and solution temperature of the solution (calibration liquid or mixed liquid) flowing in the through-hole 511a become constant.

Note that since the ion exchange membrane selectively passes specific ions, the ion exchange membrane may also be described as a detection surface capable of detecting specific ions. In addition, a ratio of the change of a specific ion concentration in the ISE, at a time when a fixed amount of solution (for example, the amount of solution that the electrolyte detection unit 410 sucks in one time) has passed through the surface of the ion exchange membrane, may be called a substitution rate.

The reference electrode 515 includes a liquid junction that generates a fixed potential. The reference electrode 515 is connected to the opening formed in the main body 511.

The suction unit 520 includes a pipe 521, a terminal end member 522, a probe holder 523, a first packing 524, a second packing 525, and a vortex generation member 526. The suction unit 520 is attached to the cylindrical recess of the main body 511.

The pipe 521 is formed of, for example, stainless steel. The inside diameter of the pipe 521 (i.e., the outside diameter of a hollow part 521a of the pipe 521) is less than the diameter of the through-hole 511a. The pipe 521 may be called "probe". One end of the pipe 521 corresponds to a distal end of the probe that sucks the solution. The terminal end member 522 is attached to the other end of the pipe 521. Note that the probe may be a combination of the pipe 521 and the terminal end member 522.

The terminal end member 522 is formed of, for example, stainless steel. The outside diameter of the terminal end member 522 has such a dimension as to enable attachment to the recess of the main body 511. A through-hole having a substantially equal diameter to the outside diameter of the pipe 521 is formed in the terminal end member 522. The pipe 521 is inserted in the through-hole of the terminal end member 522. The pipe 521 and the terminal end member 522 are bonded by, for example, soldering.

The probe holder 523 is formed of, for example, polyoxymethylene (POM) resin. A through-hole for insertion of the probe is formed in the probe holder 523. The probe holder 523 holds the probe by the insertion of the probe in the through-hole. Note that the probe holder 523 may be provided with a screw mechanism for fixing the probe.

The first packing 524 is formed of, for example, fluoro-rubber. The first packing 524 has a hollow discoidal shape. The outside diameter of the first packing 524 is substantially equal to the outside diameter of the terminal end member 522. The inside diameter of the first packing 524 (i.e., the outside diameter of a hollow part 524a) is substantially equal to or slightly greater than the diameter of the through-hole 511a. Note that since the second packing 525 has the same structure as the first packing 524, a description of the second packing 525 is omitted.

Further, the first packing 524 and the second packing 525 are disposed between the probe and the main body 511. By the first packing 524 and the second packing 525 being disposed between the probe and the main body 511, liquid leakage due to the connection between the probe and the main body 511 can be prevented.

The vortex generation member 526 is formed of, for example, a hard material with a high corrosion resistance (for example, stainless steel). The vortex generation member 526 has a columnar shape, in particular, a circular cylindrical shape (circular columnar shape). The outside diameter of the vortex generation member 526 is, for example, in a range of 1/4 to 1/3 of the inside diameter of the through-hole 511a (electrode unit flow path) of the electrode unit 510. The entire length of the vortex generation member 526 is less than the outside diameter of the first packing 524 and is greater than the inside diameter of the first packing 524 (or the inside diameter of the electrode unit flow path).

For example, the vortex generation member 526 is a columnar member disposed to intersect with the flowing direction of the solution. Specifically, the vortex generation member 526 is disposed to be clamped between the first packing 524 and second packing 525 in such a manner as to divide the hollow parts (i.e., hollow part 524a and hollow part 525a) of the first packing 524 and second packing 525 at the center thereof. In this case, the vortex generation member 526 may be fixed to either the first packing 524 or the second packing 525. It is assumed that the first packing 524 and the second packing 525, between which the vortex generation member 526 is clamped, are put in close contact with each other in such a degree as to prevent liquid leakage.

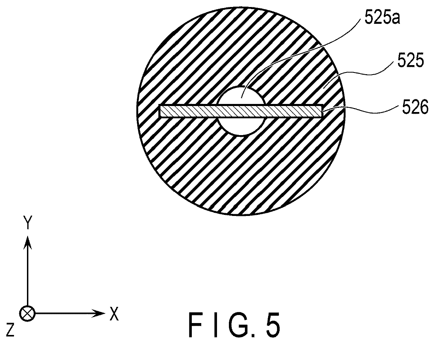

FIG. 5 is a diagram illustrating an X-Y cross section including the vortex generation member of FIG. 4, as viewed from a -Z direction. As illustrated in FIG. 5, the entire length of the vortex generation member 526 is less than the outside diameter of the second packing 525 and is greater than the inside diameter of the second packing 525 (i.e., the outside diameter of the hollow part 525a). In addition, the vortex generation member 526 is disposed in such a manner as to divide the hollow part 525a of the second packing 525 at the center thereof. Specifically, by the vortex generation member 526 being clamped between the first packing 524 (not illustrated in FIG. 5) and the second packing 525, the vortex generation member 526 is disposed to intersect with the flowing direction of the solution.

In brief outline, by the electrode unit 510 and the suction unit 520 being connected, the solution sucked by the probe flows into the through-hole 511a of the electrode unit 510 through the hollow part 521a of the pipe 521, the hollow part 524a of the first packing 524, and the hollow part 525a of the second packing 525. In addition, in the suction unit 520, by the vortex generation member 526 being disposed in the flow path in which the solution flows, vortices (Karman vortices) can be generated on the rear side of the vortex generation member 526. Thereby, the solution, in which Karman vortices are generated, can be caused to flow into the through-hole 511a of the electrode unit 510.

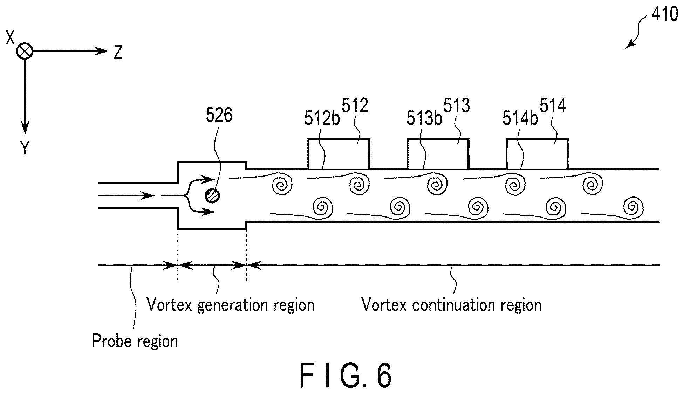

FIG. 6 is a diagram for describing a region in which Karman vortices occur, and a region in which a Karman vortex street continues, in the electrolyte detection unit according to the first embodiment. FIG. 6 illustrates, in a simplified manner, the flow path in the electrolyte detection unit 410, which is divided into a probe region, a vortex generation region and a vortex continuation region. Note that the probe region corresponds to the hollow part 521a of the pipe 521 that constitutes the probe, the vortex generation region corresponds to the hollow part 524a of the first packing 524 and the hollow part 525a of the second packing 525, in which the vortex generation member 526 is disposed, and the vortex continuation region corresponds to the through-hole 511a of the electrode unit 510.

The solution sucked by the probe is in a state of less flow turbulence in the probe region. If the solution flows from the probe region into the vortex generation region, the flow of the solution is disturbed by the vortex generation member 526, and Karman vortices are generated. In the vortex continuation region, the Karman vortices can be continued in a predetermined section in the flow of the solution.

Further, in the vortex continuation region, an ion exchange membrane 512b of the ISE 512, an ion exchange membrane 513b of the ISE 513, and an ion exchange membrane 514b of the ISE 514 are provided. These ion exchange membranes replace specific ions between the calibration liquid in the ISE and the mixed liquid including the sample in the flow path at a time of measurement, and replace specific ions between the solution including specific ions in the ISE and the calibration liquid in the flow path.

In the Karman vortices, vortices of different rotational directions (for example, right-handed vortices and left-handed vortices) are alternately and continuously generated. Further, a set of successive vortices in different rotational directions has a cycle (length) corresponding to the diameter of the cylinder of the vortex generation member. For example, the cycle of the Karmal vortices becomes longer as the diameter of the cylinder becomes greater. For example, the substitution rate of ions can be improved by providing the ion exchange membranes in a range from a point at which Karman vortices occur (i.e., vortex generation member 526) to six times the cycle of Karman vortices.

Conventionally, disturbance is caused to occur in the solution by caulking the other end of the probe at which the terminal end member is fixed, and the solution in which the disturbance occurs is caused to flow in the flow path in which the ion exchange membranes are provided. On the other hand, in the first embodiment, by causing Karman vortices by the vortex generation member 526, the solution in which the Karman vortices are generated is caused to flow into the flow path in which the ion exchange membranes are provided.

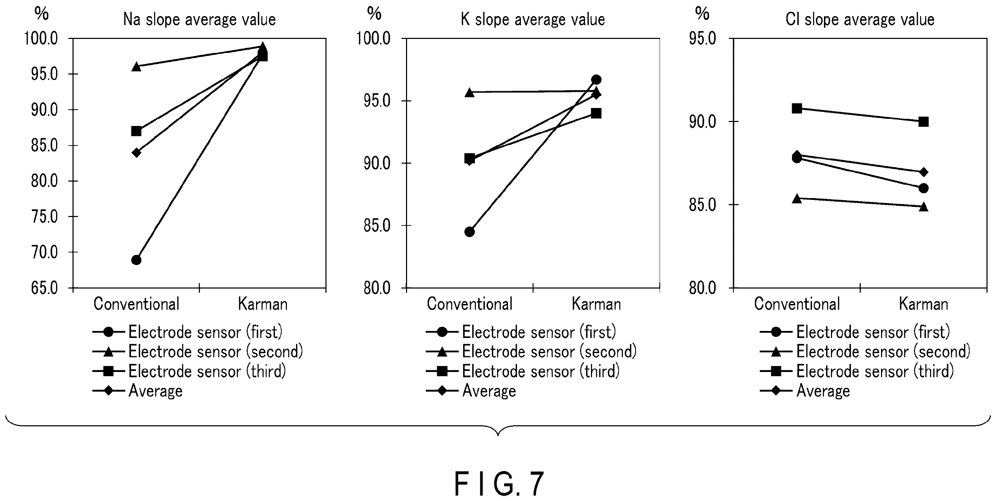

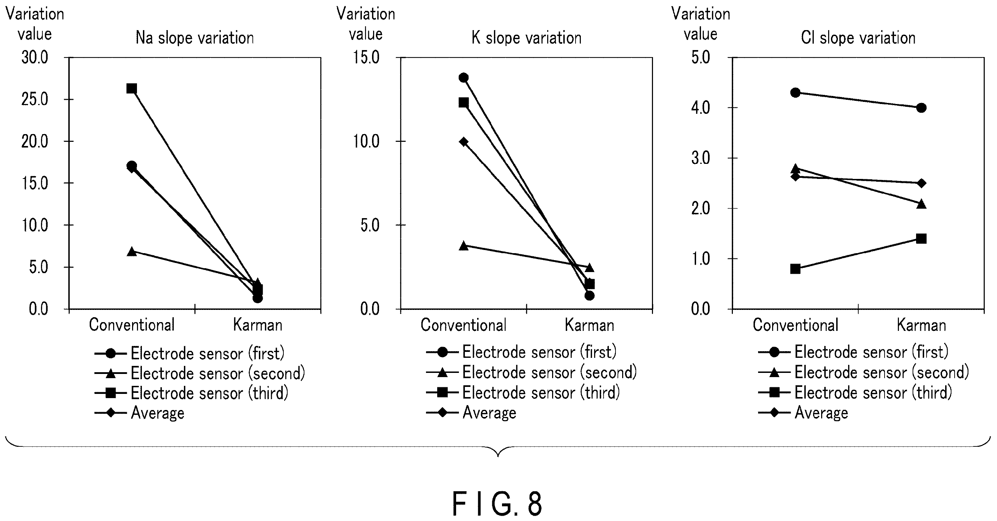

Hereinafter, referring to FIG. 7 and FIG. 8, a description is given of slope averages and slope variations of substitution rates of conventional liquid feed and liquid feed involving Karman vortices. The slope is a ratio of a measurement value to an ideal value of a voltage difference between different concentrations. Specifically, it can be said that as the slope is closer to 100%, the substitution rate is higher.

FIG. 7 is graphs of comparison between conventional liquid feed and liquid feed involving Karman vortices, with respect to slope averages of respective ion electrodes in the electrolyte detection unit according to the first embodiment. The slope average is an average of slopes successively measured five times. FIG. 7 illustrates measurement results of measurement using three electrode sensors (electrode units) having different manufacturer's serial numbers, with respect to each of an Na slope average value, a K slope average value and a Cl slope average value.

In each of the graph of the Na slope average value and the graph of the K slope average value, the slopes increases closer to 100% in the liquid feed involving Karman vortices than in the conventional liquid feed. On the other hand, in the graph of the Cl slope average value, the slopes are slightly lower in the liquid feed involving Karman vortices than in the conventional liquid feed. However, since the amounts of increase of the Na slope average value and the K slope average value are much greater than the amount of decrease of the Cl slope average value, it can be said that, as a whole, the substitution rate is higher in the liquid feed involving Karman vortices than in the conventional liquid feed.

From FIG. 7, it is understood that the substitution rate is more improved as a greater amount of solution flows toward the surfaces of the ion exchange membranes. It is thus understood that the substitution rate becomes higher in the flow in which Karman vortices are generated than in the conventional flow in which irregular turbulence occurs.

FIG. 8 is graphs of comparison between conventional liquid feed and liquid feed involving Karman vortices, with respect to slope variations of respective ion electrodes in the electrolyte detection unit according to the first embodiment. The slope variation is an average of variation values of slopes successively measured five times. FIG. 8 illustrates measurement results of measurement using three electrode sensors (electrode units) having different manufacturer's serial numbers, similarly with FIG. 7, with respect to each of an Na slope variation, a K slope variation and a Cl slope variation.

In each of the graph of the Na slope variation and the graph of the K slope variation, the slope variation decreases closer to zero in the liquid feed involving Karman vortices than in the conventional liquid feed. On the other hand, in the graph of the Cl slope variation, the slope variations are substantially similar between the conventional liquid feed and the liquid feed involving Karman vortices. From this, it can be said that, as a whole, the stability of measurement is higher in the liquid feed involving Karman vortices than in the conventional liquid feed.

In brief outline, the electrolyte detection unit 410 includes the probe (pipe 521 or the like) that feeds a solution sucked from one end to the other end; the vortex generation member 526 disposed near the other end of the probe; and the electrode unit 510 that generates potentials relating to predetermined ions (solidum ions, potassium ions, and chloride ions) included in the solution that has passed through the region (hollow part 524a and hollow part 525a) in which the vortex generation member 526 is disposed.

As has been described above, the electrolyte detection unit according to the first embodiment includes the probe that feeds a solution sucked from one end to the other end; the vortex generation member disposed near the other end of the probe; and the electrode unit that generates potentials relating to predetermined ions included in the solution that has passed through the region in which the vortex generation member is disposed. In addition, in the first embodiment, the vortex generation member is disposed to be clamped between the two packings provided between the probe and the electrode unit.

Thus, in the electrolyte detection unit according to the first embodiment, since the flow of the solution toward the surface of the ion exchange membrane increases by generating Karman vortices in the flow of the solution by the vortex generation member, the substation rate of ions can be improved.

For example, conventionally, in the calibration of the electrolyte detection unit, the suction of the calibration liquid is performed twice (i.e., two cycles). On the other hand, in the electrolyte detection unit according to the first embodiment, since the substitution rate of ions is improved, a substitution rate, which is about twice higher than the substitution rate in the conventional art, can be expected. Thus, in the configuration of the electrolyte detection unit according to the first embodiment, the suction of the calibration liquid can be completed by one-time suction (i.e., by one cycle).

### (Second Embodiment)

The electrolyte detection unit according to the first embodiment is configured such that the vortex generation member is clamped between the two packings. On the other hand, an electrolyte detection unit according to a second embodiment is configured such that the vortex generation member is provided in the terminal end member.

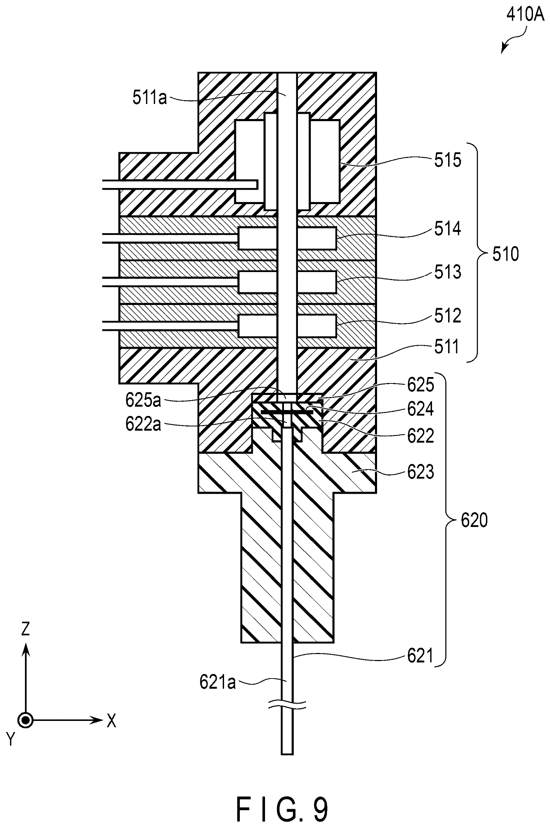

FIG. 9 is a diagram exemplarily illustrating a configuration of the electrolyte detection unit according to the second embodiment. For example, as illustrated in FIG. 9, an electrolyte detection unit 410A includes the electrode unit 510 and a suction unit 620.

The suction unit 620 includes a pipe 621, a terminal end member 622, a probe holder 623, a vortex generation member 624, and a packing 625. The suction unit 620 is attached to the cylindrical recess of the main body 511.

The pipe 621 is formed of, for example, stainless steel. The inside diameter of the pipe 621 (i.e., the outside diameter of a hollow part 621a of the pipe 621) is less than the diameter of the through-hole 511a. The pipe 621 may be called "probe". One end of the pipe 621 corresponds to a distal end of the probe that sucks the solution. The terminal end member 622 is attached to the other end of the pipe 621. Note that the probe may be a combination of the pipe 621 and the terminal end member 622.

The terminal end member 622 is formed of, for example, hard rubber. The outside diameter of the terminal end member 622 has such a dimension as to enable attachment to the recess of the main body 511. A first through-hole having a substantially equal diameter to the inside diameter of the pipe 621, and a second through-hole having a substantially equal diameter to the outside diameter of the pipe 621, are formed in the terminal end member 622. Further, the first through-hole and the second through-hole communicate with each other, with their center axes being identical. For example, the pipe 621 is inserted (press-inserted) in the second through-hole, and thereby the first through-hole and the hollow part 621a of the pipe 621 form a flow path (terminal end member flow path) having an identical diameter. Further, an insertion hole is formed in the terminal end member 622 in such a manner as to penetrate in a direction perpendicular to the second through-hole, and the vortex generation member 624 is inserted in the insertion hole. The length of the insertion hole is less than the outside diameter of the terminal end member 622.

The probe holder 623 is formed of, for example, POM resin. A through-hole for insertion of the probe is formed in the probe holder 623. The probe holder 623 holds the probe by the insertion of the probe in the through-hole. Note that the probe holder 623 may be provided with a screw mechanism for fixing the probe.

The vortex generation member 624 is formed of, for example, a hard material with a high corrosion resistance (for example, stainless steel). The vortex generation member 624 has a columnar shape, in particular, a circular cylindrical shape (circular columnar shape). The outside diameter of the vortex generation member 624 is, for example, in a range of 1/4 to 1/3 of the inside diameter of the first through-hole in which the vortex generation member 624 is disposed. The entire length of the vortex generation member 624 is greater than the inside diameter of the first through-hole, and is equal to or less than the length of the insertion hole.

For example, the vortex generation member 624 is a columnar member disposed to intersect with the flowing direction of the solution. Specifically, the vortex generation member 624 is disposed by being inserted (press-inserted) in the terminal end member in a direction perpendicular to the flow path of the terminal end member 622.

The packing 625 is formed of, for example, fluoro-rubber. The packing 625 has a hollow discoidal shape. The outside diameter of the packing 625 is substantially equal to the outside diameter of the terminal end member 622. The inside diameter of the packing 625 (i.e., the outside diameter of a hollow part 625a) is substantially equal to or slightly greater than the diameter of the through-hole 511a.

Further, the packing 625 is disposed between the probe and the main body 511. By the packing 625 being disposed between the probe and the main body 511, liquid leakage due to the connection between the probe and the main body 511 can be prevented.

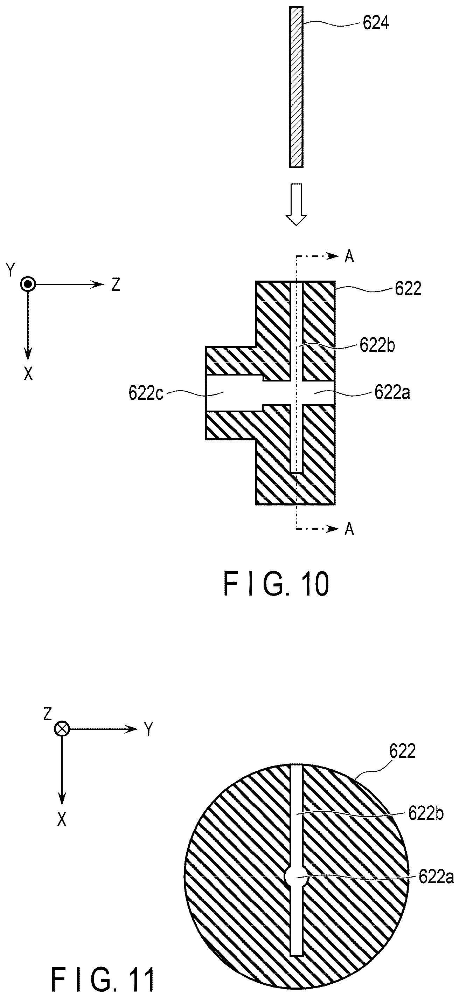

FIG. 10 is a diagram illustrating a state before the vortex generation member is inserted into the terminal end member of FIG. 9. FIG. 10 illustrates the terminal end member 622 and the vortex generation member 624. A first through-hole 622a, an insertion hole 622b and a second through-hole 622c are formed in the terminal end member 622. The insertion hole 622b is perpendicular to the first through-hole 622a.

FIG. 11 is a diagram illustrating a cross section along line A-A of FIG. 10, as viewed from the -Z direction. The line A-A in FIG. 10 includes a center axis of the insertion hole 622b, and is perpendicular to a center axis of the first through-hole 622a. FIG. 11 illustrates a cross section of the terminal end member 622. The first through-hole 622a and the insertion hole 622b are formed in the terminal end member 622.

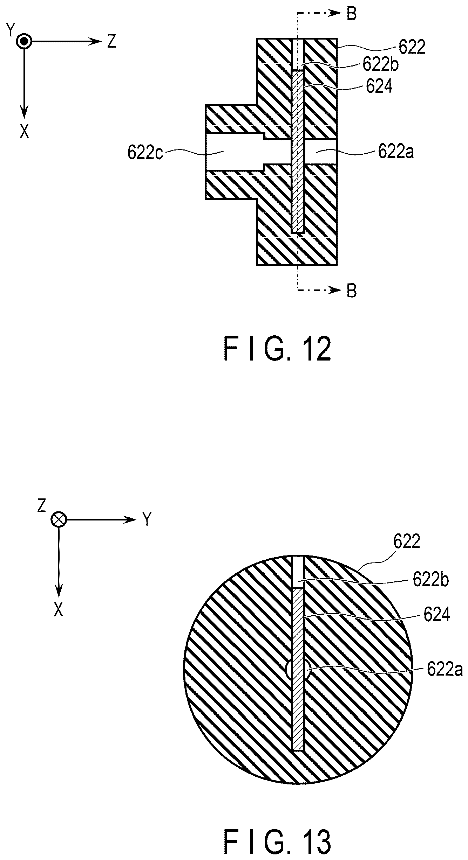

FIG. 12 is a diagram illustrating a state after the vortex generation member is inserted into the terminal end member of FIG. 9. FIG. 12 illustrates the terminal end member 622, and the vortex generation member 624 inserted in the terminal end member 622. The vortex generation member 624 is inserted in the insertion hole 622b, and penetrates the first through-hole 622a in a direction perpendicular to the center axis of the first through-hole 622a.

FIG. 13 is a diagram illustrating a cross section along line B-B of FIG. 12, as viewed from the -Z direction. The line B-B in FIG. 12, like the line A-A in FIG. 10, includes the center axis of the insertion hole 622b, and is perpendicular to the center axis of the first through-hole 622a. FIG. 13 illustrates a cross section of the terminal end member 622 and the vortex generation member 624. By the vortex generation member 624 being inserted in the terminal end member 622, the vortex generation member 624 is disposed to intersect with the flowing direction of the solution in the terminal end member flow path.

In brief outline, by the electrode unit 510 and the suction unit 620 being connected, the solution sucked by the probe flows into the through-hole 511a of the electrode unit 510 through the hollow part 621a of the pipe 621, the first through-hole 622a of the terminal end member 622, and the hollow part 625a of the packing 625. In addition, in the suction unit 620, by the vortex generation member 624 being disposed in the flow path in which the solution flows, vortices (Karman vortices) can be generated on the rear side of the vortex generation member 624. Thereby, the solution, in which Karman vortices are generated, can be caused to flow into the through-hole 511a of the electrode unit 510.

Further, the electrolyte detection unit 410A includes the probe (pipe 621 or the like) that feeds a solution sucked from one end to the other end; the vortex generation member 624 disposed near the other end of the probe; and the electrode unit 510 that generates potentials relating to predetermined ions (solidum ions, potassium ions, and chloride ions) included in the solution that has passed through the region (first through-hole 622a) in which the vortex generation member 624 is disposed.

As has been described above, the electrolyte detection unit according to the second embodiment includes the probe that feeds a solution sucked from one end to the other end; the vortex generation member disposed near the other end of the probe; and the electrode unit that generates potentials relating to predetermined ions included in the solution that has passed through the region in which the vortex generation member is disposed. In addition, in the second embodiment, the vortex generation member is disposed by being inserted in the terminal end member that the probe includes.

Thus, in the electrolyte detection unit according to the second embodiment, the same advantageous effects as in the first embodiment can be expected.

While the vortex generation member in the first embodiment is disposed by being clamped between the two packings, the vortex generation member in the second embodiment is disposed by being inserted in the insertion hole formed in the terminal end member. Thus, in the electrolyte detection unit according to the second embodiment, the vortex generation member can be surely and easily disposed at the center of the flow path.

### (Other Embodiment)

The electrolyte detection unit according to the second embodiment is configured such that the vortex generation member is provided in the terminal end member. On the other hand, an electrolyte detection unit according to another embodiment is configured such that the vortex generation member is clamped between the packing and the terminal end member.

The electrolyte detection unit according to the another embodiment is configured such that the vortex generation member is clamped between the packing, which is formed of fluoro-rubber as a material, and the terminal end member, which is formed of hard rubber as a material. By this configuration, unlike the electrolyte detection unit according to the first embodiment, the two packings are not needed, and the vortex generation member can be disposed at a desired position.

### (Applied Example)

In each of the above-described embodiments, as the concrete shape of the vortex generation member, the circular cylindrical shape (circular columnar shape) was described, but the shape is not limited to this. The vortex generation member may have an elliptic cylindrical shape. Further, the vortex generation member may have any other shapes that can cause Karman vortices.

Note that, from the standpoint that the generation of vortices improves the substitution rate of ions, the electrolyte detection unit may have the following configuration. The electrolyte detection unit according to each of the above-described embodiments includes a probe that feeds a solution sucked from one end to the other end, and an electrode unit that is connected to the other end of the probe and generates potentials relating to predetermined ions included in the solution, and vortices (for example, Karman vortices) are generated in the solution sucked by the probe, and potentials relating to predetermined ions included in the solution, in which the vortices are generated, are generated.

According to at least one of the above-described embodiments, the substitution rate of ions can be improved in the electrolyte detection unit.

While certain embodiments have been described, these embodiments have been presented by way of example only, and are not intended to limit the scope of the inventions.

Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. An electrolyte detection unit (410) comprising:
a probe (pipe 521) configured to feed a solution sucked from one end to the other end;
a vortex generation member (526) disposed near the other end of the probe (pipe 521); and
an electrode unit (510) configured to generate a potential relating to predetermined ions included in the solution that has passed through a region in which the vortex generation member (526) is disposed.

2. The electrolyte detection unit (410) according to claim 1, wherein the vortex generation member (526) is a member having a columnar shape, which is disposed to intersect with a flowing direction of the solution.

3. The electrolyte detection unit (410) according to claim 2, wherein the columnar shape is a circular cylindrical shape.

4. The electrolyte detection unit (410) according to claim 3, wherein
the electrode unit (510) includes a flow path for flowing in the solution, and
an outside diameter of the vortex generation member (526) is less than an inside diameter of the flow path.

5. The electrolyte detection unit (410) according to claim 4, further comprising two packings (a first packing 524, a second packing 525) provided between the probe (pipe 521) and the electrode unit (510), wherein
the vortex generation member (526) is disposed by being clamped between the two packings (a first packing 524, a second packing 525).

6. The electrolyte detection unit (410) according to claim 5, wherein an entire length of the vortex generation member (526) is less than an outside diameter of each of the two packings (a first packing 524, a second packing 525) and is greater than an inside diameter of the flow path.

7. The electrolyte detection unit (410) according to claim 4, wherein
the probe (pipe 521) includes a terminal end member (622) at the other end, and
the vortex generation member (526) is disposed by being inserted in the terminal end member (622).

8. The electrolyte detection unit (410) according to claim 7, wherein an entire length of the vortex generation member (526) is greater than an inside diameter of a flow path in which the vortex generation member (526) provided in the terminal end member (622) is disposed, and is greater than an inside diameter of the flow path of the electrode unit (510).

9. The electrolyte detection unit (410) according to claim 7, wherein the terminal end member (622) is formed of hard rubber.

10. The electrolyte detection unit (410) according to claim 4, further comprising a packing (625) provided between the probe (pipe 521) and the electrode unit (510), wherein
the probe (pipe 521) includes a terminal end member (622) at the other end, and
the vortex generation member (526) is disposed by being clamped between the terminal end member (622) and the packing (625).

11. The electrolyte detection unit (410) according to claim 10, wherein an entire length of the vortex generation member (526) is less than an outside diameter of the packing (625) and is greater than an inside diameter of the flow path.

12. The electrolyte detection unit (410) according to claim 2, wherein the columnar shape is an elliptic cylindrical shape.

13. The electrolyte detection unit (410) according to claim 1, wherein the vortex generation member (526) is formed of a hard material with a high corrosion resistance.

14. The electrolyte detection unit (410) according to claim 1, wherein
the electrode unit (510) includes a flow path for flowing in the solution, and
the electrode unit (510) includes an ion exchange membrane corresponding to the predetermined ions at a position facing the flow path.

15. An electrolyte detection method comprising:
feeding a solution sucked from one end to the other end;
generating vortices in the sucked solution; and
generating a potential relating to predetermined ions included in the solution in which the vortices are generated.
